# EUROPEAN PATENT APPLICATION

(11) **EP 1 228 695 A1**
(43) Date of publication of application: **07.08.2002**
(21) Application number: 01200415.6
(22) Date of filing: 05.02.2001
(51) Int. Cl.: A23J 3/22, A23J 3/18, A23L 1/32

(54) **Process for texturising plant proteins**

(71) Applicant: Nederlandse Organisatie voor toegepast-natuurwetenschappelijk Onderzoek TNO, 2628 VK Delft (NL)
(72) Inventor: Knol, Wieger, 3708 BT Zeist (NL); Zhu, Yang, 3972 PZ Driebergen (NL)
(74) Representative: Jorritsma, Ruurd

(57) **Abstract**

A textured proteinaceous food product can be produced in a controlled and safe manner by adding a gas-forming agent to a protein substrate and subjecting the protein substrate with the gas-forming agent in the presence of water to a heat treatment. The proteins substrate is preferably vegetable, such as gluten or legume protein. This process results in a meat-like product having desired and reproducible texture and taste.

## Description

The present invention relates to a textured food product or food ingredient obtained from natural proteins and to a process of producing such product.

There is an increasing need to substitute meat proteins in foodstuffs by proteins from other sources, especially vegetable sources, in order to reduce cost and environmental burden, avoid unnecessary slaughter of animals, improve protein efficiency in global food supply etc. These substitute proteins should have similar functional properties like meat, in particular as to its texture (structure, firmness, mouthfeel, bite).

There are basically two approaches for producing substitute food protein. One approach is to use a non-animal organism that produces sufficient amounts of suitable protein, and to process the protein-rich organism into a foodstuff or food ingredient having the required texture. For example, EP-A-123434 and EP-A-986960 disclose production of fungal material as food protein using *Fusarium graminearum* (the commercial product being known as "Quorn") and *Rhizopus oryzae*, respectively. This approach has been restricted to the use of fungi and is not applicable to vegetable protein. Moreover, the fungal products are rather expensive.

The other approach is to use protein material which itself is not directly suitable as a protein foodstuff, and to treat the protein material by enzymatic or other means so as to obtain the required texture, taste, mouthfeel, etc. As an example, EP-A-963704 discloses modification of protein-containing food material such as wheat flour, soy protein or animal protein by a trans-glutaminase and an oxidoreductase to improve its texture. Such enzymatic processes are expensive.

Most current vegetable proteins used as meat substitutes are derived from a single source, soy. Soy is more and more often genetically modified and is therefore less attractive for some consumer groups. Furthermore, most meat substitutes are expensive as explained above. For many inexpensive protein sources, the available processes for upgrading them to acceptable food proteins have drawbacks such as price, microbial safety and the like, and the presently available meat substitutes have a narrow and only moderately tuneable spectrum of taste and other properties. Thus there is a need for protein products having novel characteristics.

It was found according to the invention that a useful protein food product or food ingredient having the texture of meat or processed egg protein or other food protein can be obtained from relatively inexpensive raw materials. According to the invention, a gas-forming agent is added to an aqueous suspension of the protein substrate and the gas-forming agent is allowed to release gas into the protein substrate during a subsequent heat treatment of the suspension.

The process of the invention allows the production of textured proteinaceous products suitable for substituting meat-like components in a variety of food products. The texturising process can be tuned by adjusting the nature and the amount of the gas-forming agent and the process conditions.

The protein substrate is a non-textured proteinaceous material and may comprise proteins from vegetable source, or from animal source, or even from micro-organisms. Vegetable proteins include gluten (wheat, maize, rye and other cereals), rice protein, legume protein (pea, lupine, soy etc.), grass protein, potato protein, bostel protein and other protein-containing (residual) material. Animal proteins include chicken (meat) protein, egg protein, milk protein, blood protein, skin collagen, hydrolysed keratin and the like. Preferably, the protein is derived from vegetable sources. Gluten or a mixture containing gluten is the preferred protein substrate. The raw protein may be pre-treated by hydrolysis, decoloration, isolation, milling, drying etc. by standard methods, before being used according to the invention. The protein substrate to be used according to the invention should contain at least 10%, preferably at least 20% by weight, more preferably at least 30% by weight of protein; other materials, such as polysaccharides, do not generally interfere with the process of the invention. If necessary, small amounts (e.g. up to 33% with respect to the protein weight) of food-grade hydrocolloids such as xanthan, pectin, agar, carragheenan, carboxymethyl cellulose and the like, can be used to ensure sufficient viscoelasticity of the mixture, and thus to produce sufficient texturing effect.

The gas-forming agent is preferably a bound form of carbon dioxide, such as a metal salt of carbonic acid or of a semi-ester thereof. Alkali metal and ammonium bicarbonates, such as sodium bicarbonate (baking powder) are especially suitable. The gas-forming agent may also be a dissolved form of carbon dioxide or a (bi)carbonate salt. The amount of gas-forming agent is preferably 0.01-0.02 g per g of dry gram protein substrate

The conditions of gas release are chosen as a function of the desired product properties and the composition of the protein substrate mixture. If desired, the treatment with the gas-forming agent may be preceded or accompanied by a treatment with a protease resulting in a further adjustment of the final texture and nutritional properties of the food product. Also, it is possible to treat the protein substrate with fermenting microorganisms, such as lactobacilli or yeasts, under conventional process conditions (temperature: 10-50°C, duration, several minutes to several hours, e.g. 10 minutes to 16 hours).

The concentration and composition of the protein substrate must be such that gas formation can occur and can result in the desired structure. Usually, the protein is therefore used in a mixture with water, containing 20-80 wt.% of protein.

After addition of the gas-forming agent, the product is subjected to a heat treatment. During the heat treatment both gas release and denaturation of the protein occur, resulting in a foamy and/or fibrous structure of the mixture. The heat treatment may be simple high temperature, i.e. in an oven at 60-140°C. However, excessive dehydration should be avoided, for example by heating in a closed system. A suitable heat treatment is a treatment with steam. Alternatively, microwave treatment may be used. If desired, the product can subsequently be dried, cooled, freeze-dried, and brought in desired shape by cutting, milling, moulding and the like.

Other food components can be added before, during or after the gas treatment or even after the optional drying and shaping. Such components include colorants, flavourings, preservatives, process aids, fillers, and the like.

The product of the process of the invention can be used for a variety of purposes. These include meat substitutes in vegetarian product, inexpensive meat-like ingredients in meat products, meat-like ingredients in salads, dressings, soups, textured protein in composite or convenience foods such as pizza's, pastry etc.

### Example 1

Active wheat gluten (45 g, obtained from Avebe Latenstein, Nijmegen, NL) was mixed with 0.68 g baking powder (50 % sodium bicarbonate, 50 % sodium pyrophosphate) and 90 ml tap water. The suspension was kneaded with a household mixer with dough-hooks (Philips Type HM3060) for 1.5 minutes. The obtained visco-elastic mixture was steam-heated in a pressure cooker (at normal pressure) for 2 hours. After steaming a light brown textured product with a regular sponge-like structure was obtained, with a neutral smell. The textured product could be sliced in various shapes, like pieces of meat.

### Example 2

Active wheat gluten (45 g) was mixed with 90 ml of cold (5 °C) carbonated mineral water (Barisart), containing 7.2 g carbon dioxide per liter, in a beaker with a household mixer in a similar way as for example 1. The mixture was further treated as in example 1. After steaming a light brown textured product was obtained with similar characteristics as in example 1.

## Claims

1. A process of producing a textured proteinaceous food product comprising adding a gas-forming agent to a water-insoluble protein substrate suspended in water and subjecting the substrate to a heat treatment while allowing the gas-forming agent to release gas.

2. A process according to claim 1, wherein said protein substrate comprises gluten.

3. A process according to claim 1 or 2, wherein said protein substrate consists of at least 20%, by dry weight, of protein.

4. A process according to any one of claims 1-3, wherein the gas-forming agent is a carbonate or bicarbonate salt or carbon dioxide.

5. A process according to any one of claims 1-4, wherein 0.01-0.02 g of said gas-forming agent is added per g dry weight of protein substrate.

6. A process according to any one of claims 1-5, wherein said heat treatment comprises a steam treatment or a microwave treatment.

7. A textured proteinaceous food product, obtainable by adding a gas-forming agent to a suspension of a vegetable protein and subsequently subjecting the suspension to a heat treatment.
